(19) Europäisches Patentamt
European Patent Office
Office européen des brevets

(11) **EP 0 788 270 A2**

(12) **EUROPÄISCHE PATENTANMELDUNG**

(43) Veröffentlichungstag:
 **06.08.1997 Patentblatt 1997/32**

(51) Int. Cl.⁶: **H04M 11/04**

(21) Anmeldenummer: **96120020.1**

(22) Anmeldetag: **13.12.1996**

(84) Benannte Vertragsstaaten:
 **AT BE CH DE DK ES FI FR GB GR IE IT LI LU MC NL PT SE**

(30) Priorität: **31.01.1996 DE 19603354**

(71) Anmelder: **Deutsche Telekom AG**
 **53113 Bonn (DE)**

(72) Erfinder: **Baumkötter, Manfred**
 **48346 Ostbevern (DE)**

(54) **Verfahren und Anordnung zu schnellen Weiterleitung einer Alarm-bzw. einer Notrufmeldung über ein Modem**

(57) Die erfindungsgemäße Aufgabe besteht darin, Alarmmeldungen bzw. Notrufe vorrangig vor bestehenden Verbindungen schnell und sicher weiterzuleiten. Dazu sollen bereits vorhandene Anschlüsse bzw. Verbindungswege benutzt werden.

Erfindungsgemäß schaltet sich ein Modem bei Schleifenstromerkennung in eine bestehende Verbindung ein. Der Modem trennt die bestehende Verbindung durch Schleifenunterbrechung auf, belegt anschließend die Leitung und baut eine Verbindung zum Absetzen der eingegangenen Alarm- bzw. Notrufmeldung auf.

Ein wesentlicher Vorteil der Erfindung liegt darin, daß vorhandene Anschlüsse für die Alarm- und Notruftechnik mitbenutzt werden können. Die Kosten für einen sonst erforderlichen zweiten Anschluß können vermieden werden.

Fig. 1

Printed by Rank Xerox (UK) Business Services
2.14.11/3.4

## Beschreibung

Nach dem Stand der Technik prüft ein Modem vor dem Verbindungsaufbau bzw. der Belegung der Leitung, ob die Leitung frei ist. Bei belegter Leitung gibt der Modem ggf. eine Meldung über eine Schnittstelle aus und bricht den Verbindungsaufbau ab.

Diese Arbeitsweise wurde eingeführt, damit ein Modem bestehende Verbindungen anderer Geräte, wie beispielsweise von Telefonen oder Faxgeräten, nicht stört. Bei einer Verwendung in der Alarm- und Notruftechnik hat diese Arbeitsweise jedoch Nachteile, weil anstehende Notrufverbindungen nicht unverzüglich, sondern erst nach Freiwerden der Verbindungswege aufgebaut werden können. Die erfindungsgemäße Aufgabe besteht darin, Alarmmeldungen bzw. Notrufe, vorrangig vor bestehenden Verbindungen, schnell und sicher weiterzuleiten. Dazu sollen bereits vorhandene Anschlüsse bzw. Verbindungswege benutzt werden.

Die erfindungsgemäße Aufgabe wird wie folgt gelöst. Wenn eine Endeinrichtung aus dem Alarm/Notrufbereich ein weiterzumeldendes Ereignis feststellt, schickt die Endeinrichtung einen Verbindungsaufbaubefehl (z. B. eine Hayes Zeichenfolge) über die serielle Schnittstelle zum angeschlossenen Modem. Der Modem prüft nun, ob der Wählanschluß/Telefonanschluß frei oder belegt ist. Bei freier Wählleitung erfolgt der Verbindungsaufbau in der üblichen Art und Weise. Wenn die Leitung jedoch durch eine bestehende Verbindung belegt ist, schaltet sich der Modem in die Leitung ein. Anschließend wird die Leitung für den Aufbau der Notrufverbindung bzw. der Alarmverbindung freigeschaltet. Das geschieht durch Auslösung der bestehenden Verbindung mittels Schleifenunterbrechung. Die Schleifenunterbrechung erfolgt entweder durch ein längeres Öffnen des Impulsgabeschaltelements für die Wahl Impulskontakt i oder durch ein speziell dafür angeordnetes Schaltelement Trennkontakt tr (beispielsweise bei reinen MFV-Modem ohne Impulskontakt i). Durch die Schleifenunterbrechung wird die Leitung freigeschaltet. Der Modem belegt nun durch Schließen des Impulskontakts i seinerseits die Leitung. Nach erfolgreicher Auswertung des Wähltons beginnt der Modem mit dem Verbindungsaufbau für die Notrufverbindung bzw. die Alarmverbindung gemäß dem bekannten Stand der Technik.
Nach Ende der Verbindung trennt der Modem mit den Schaltmitteln i- oder tr1-Kontakt die Verbindung erst auf. Danach erfolgt die Durchschaltung zu den weiteren Endgeräten über die u-Kontakte u1 und u2.
Durch dieses Vorgehen wird verhindert, daß über weitere sich im Belegtzustand befindende Endgeräte (Schleife) die gebührenpflichtige Verbindung weiter aufrecht erhalten bleibt.

Bei einem anstehenden Notruf ist es erforderlich, eine eventuell besetzte Leitung schnell freizuschalten. Dazu ist eine möglichst kurze Schleifenunterbrechungszeit von Vorteil. Bestimmte Situationen bei bestimmten Vermittlungssystemen erfordern aber längere Schleifenunterbrechungszeiten. Um den Modem auf diese Situation anzupassen, sollte die Schleifenunterbrechungszeit am Modem einstellbar sein. Die Einstellung erfolgt auf den bei Modem üblichen Wegen (DIL Schalter, Hayes-Befehle AtSXXX = YY ).

Auf Grund von technischen Toleranzen und Betriebssituationen, wie Verbindungsaufbaurichtung ist es denkbar, daß eine vorgegebene Unterbrechungszeit nicht zu einer Auslösung einer vorbestehenden Verbindung führt. In dieser Situation könnten weitere Schleifenunterbrechungen zur erfolgreichen Auslösung der Verbindung führen. Vorteilhaft ist es hierbei, bei den weiteren Schleifenunterbrechungen die Unterbrechungszeit zu erhöhen bzw. stetig mit der Anzahl der erfolglosen Unterbrechungs- und Belegungsversuche zu erhöhen. Als Indiz für eine erfolgreiche Auslösung und die Neubelegung kann die bei Modem übliche Wähltonkennung genutzt werden.

Die Art des Wähltons ist im Telefonnetz nicht immer einheitlich. Bei Telekommunikationsanlagen sind z. B. verschiedene Töne üblich, welche eine freie interne Leitung von einer freien Amtleitung unterscheiden. Um den erfindungsgemäßen Modem auch an den Nebenstellen einer Telekommunikationsanlage sicher zu betreiben, ist die Auswertung dieser verschiedenen Wähltöne erforderlich.

Beispiel für eine Belegungsprozedur bei einer Telefonanlage (Telekommunikationsanlage/Nebenstellenanlage):

1. Der Modem erhält über die Schnittstelle (RS 232) einen Verbindungsaufbaubefehl.

2. Der Modem prüft die Leitung und stellt fest, daß die Leitung belegt ist.

3. Der Modem schaltet sich in die Leitung ein und löst die bestehende Verbindung durch Schleifenunterbrechung aus.

4. Der Modem belegt die Leitung und prüft, ob der Wählton der Telefonanlage anliegt.

5. Der Wählton liegt nicht an.

6. Der Modem beendet den Verbindungsaufbauversuch durch Schleifenunterbrechung und belegt die Leitung nach einer dieses Mal längeren Zeit der Schleifenunterbrechung erneut.

7. Der Modem prüft, ob der Wählton der Telefonanlage anliegt.

8. Der Wählton wird erkannt.

9. Der Modem wählt die Amtszugangsziffer (0 üblich).

10. Bei der Wähltonprüfung (hier "Amtston") stellt der Modem ein Besetztzeichen fest.

11. Weiter wie ab Punkt 6 bis eine freie Amtsleitung erkannt wird.

Durch dieses Verfahren wird die Wahrscheinlichkeit für einen erfolgreichen Verbindungsaufbau für Notrufe bzw. Alarmmeldungen über den Modem stark erhöht.

Vielfach werden die erfindungsgemäßen Modem in Bereichen eingesetzt, wo eine nicht weitergegebene Alarm- bzw. Notrufmeldung zu hohen Schäden führen kann. Um möglichen Schäden vorzubeugen, ist eine Signalisierung von gestörten Leitungen wichtig. Eine Signalisierung kann z. B. erfolgen, wenn der Modem nach einer durch den Benutzer vorgegebenen Anzahl von Unterbrechungs-/Belegungszyklen keine betriebsbereite Wählleitung (Wählton) erkennt. Die Signalisierung kann durch eine Signaleinrichtung (z. B. akustisch) im Modem selbst erfolgen oder in geeigneter Weise an andere Systeme weitergegeben werden (Ausgabe einer Zeichenfolge über die serielle Schnittstelle an die angeschlossene Datenendeinrichtung/Alarmquelle oder z. B. über einen potentialfreien Kontakt an beliebige weitere Geräte).

In einer weiteren Ausführung kann im Modem ein Besetzttongenerator angeordnet werden. Der Besetzttongenerator kann über geeignete Schaltmittel (Kontakte) mit den hinter dem Modem geschalteten Telefonen/Endgeräten verbunden werden. Eine Speisespannung für die Endgeräte ist ebenfalls denkbar. Diese Anordnung hat den Vorteil, daß der Telefonbenutzer während des Betriebes des Modems keine "tote Leitung" vorfindet. Zur weiteren Information des Telefonbenutzers kann der Besetzttongenerator durch ein Sprachausgabesystem bzw. einen Sprachspeicherchip ersetzt werden, welches/welcher einen entsprechenden Hinweisansagetext beinhaltet.

Um die Störung von Verbindungen anderer Endgeräte (Telefongespräche) auf ein Minimum zu reduzieren, läßt sich die erfindungsgemäße Funktion bei dem Modem einschränken. Dazu lassen sich die gängigen Systeme der Modemsteuerung/Konfiguration verwenden.

1. Einstellung durch Schalter (DIL) in Modem. Die erfindungsgemäße Unterbrechungsfunktion erfolgt nur bei entsprechender Schalterstellung.

2. Einstellung durch Steuerbefehle (z. B. Hayes-Befehle); ansonsten wie Punkt 1.

3. Steuerung über den Anwahlstring (Anwahlzeichenkette). Bei einem Zusatz in der Anwahlzeichenkette (z. B. ATND anstatt ATD) wird eine bestehende Verbindung unterbrochen.

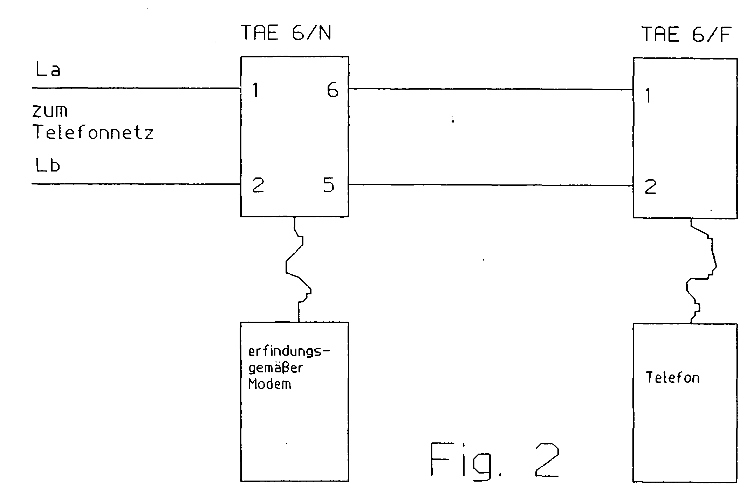

Die technische Lösung wird anhand eines Ausführungsbeispiels näher erläutert. Im Beispiel wird ein beliebiger Telefonanschluß zum Melden von Alarm- und Notrufereignissen mitbenutzt. Dazu ist ein erfindungsgemäßer Modem entsprechend Fig. 1 mit dem Telefonnetz verbunden (siehe Fig. 2). Der Modem ist desweiteren über die serielle Schnittstelle mit einer geeigneten Endeinrichtung zur Aufnahme und Verarbeitung von Alarm- und Notrufereignissen verbunden (Fig. 3). Um die erfindungsgemäßen Funktionen zu schildern, gehen wir von einer zur Zeit des Auftretens des Alarmsignals belegten Telefonleitung aus.

1. In der Endeinrichtung zur Aufnahme und Verarbeitung von Alarm- und Notrufsignalen (NDEE) wird ein Alarmsignal festgestellt.

2. Die NDEE erzeugt eine Wahllzeichenkette, die unter anderem einen Sonderbefehl (N) zur Trennung bestehender Verbindungen enthält (z. B. ATDN02523216564).

3. Die Anwahlzeichenkette wird über die serielle Schnittstelle zum Modem übertragen.

4. Der Modem wertet die Zeichenkette aus und beginnt mit dem Verabindungsaufbau.

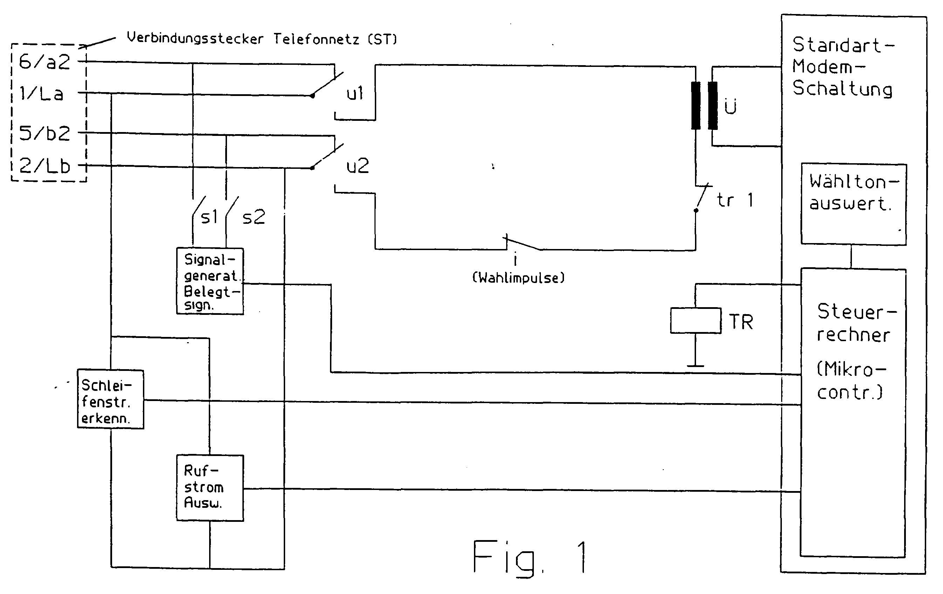

5. Der Modem stellt fest, daß die Telefonleitung belegt ist (Baugruppe Schleifenstromerkennung, Fig. 1).

6. Der Modem schaltet sich in die bestehende Verbindung ein (Kontakte u1 und u2, Fig. 1).

7. Der Modem trennt die bestehende Verbindung durch Schleifenunterbrechung (Kontakt i oder tr I in Fig. 1).

8. Der Modem belegt nach einer definierten Zeit (Auslösezeit) seinerseits die Leitung (erneute Schleifenbildung; i- oder tr 1 Kontakt).

9. Die Baugruppe Wähltonerkennung erkennt nun eine freie Leitung und beginnt mit der Wahl.

10. Durch die Kontakte s1 und s2 wird eine Belegtinformation (Kennton, Sprachinformation) zum Telefon gesendet.

11. Der weitere Verbindungsaufbau und das Senden der Nachricht zur Gegenstelle erfolgt nach dem Stand der Technik.

12. Beim Ende der Verbindung erfolgt vor der Abschaltung des Modem (u1, u2 Kontakt) noch eine Schleifenunterbrechung (tr 1 bzw. i Kontakt), um die Verbindung sicher zu trennen.

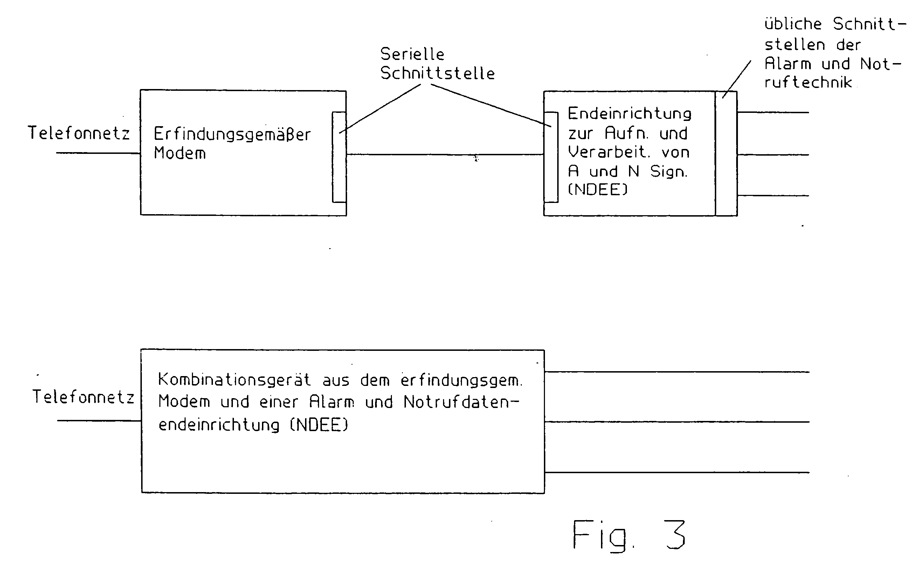

Der erfindungsgemäße Modem und die NDEE können auch in einem gemeinsamen Gehäuse angeordnet werden (Fig. 3 unten). Es kommt selten vor, daß ein Modem im Alarm- und Notrufbereich noch von anderen Geräten mitbenutzt wird.

Ein wesentlicher Vorteil der Erfindung liegt darin, daß vorhandene Anschlüsse für die Alarm und Notruftechnik mitbenutzt werden können. Die Kosten für einen sonst erforderlichen zweiten Anschluß können vermieden werden. Desweiteren wird der durch den Modem benutzte Anschluß durch die Regelbenutzung ständig geprüft. Ein Ausfall der Leitung wird voraussichtlich wesentlich eher bemerkt und behoben.

**Patentansprüche**

1. Verfahren zur schnellen Weiterleitung einer Alarm- bzw. einer Notrufmeldung über einen Modem, wobei bei Vorliegen einer Alarm- bzw. Notrufmeldung von der betroffenen Endeinrichtung ein Verbindungsaufbaubefehl über die serielle Schnittstelle an das Modem abgesetzt wird, und daß bei nicht belegten Verbindungswegen die gewünschte Verbindung zum Absetzen der Alarm- bzw. Notrufmeldung aufgebaut wird, **dadurch gekennzeichnet,** daß bei belegtem Wählanschluß/Telefonanschluß der Modem über die Schleifenstromerkennung diesen Zustand erkennt, sich in die bestehende Verbindung einschaltet und die bestehende Verbindung durch Schleifenunterbrechung auftrennt und daß der Modem dann seinerseits die Leitung wieder belegt, die Verbindung zur Stelle, für die die Alarm- bzw. Notrufmeldung bestimmt ist, aufbaut, und die eingegangene Alarm- bzw. Notrufmeldung zu dieser Stelle absetzt.

2. Verfahren nach Anspruch 1 dadurch gekennzeichnet, daß die bestehende Verbindung durch zeitlich definiertes Öffnen des Impulskontaktes (i) ausgelöst wird, wobei der Impulskontakt (i) über den Steuerrechner angesteuert wird.

3. Verfahren nach Anspruch 1 dadurch gekennzeichnet, daß die bestehende Verbindung durch Schalten eines über den Steuerrechner gesteuerten Trennkontaktes (tr 1) aufgetrennt und ausgelöst wird.

4. Verfahren nach Anspruch 1, 2 und 3 dadurch gekennzeichnet, daß die Unterbrechungszeit durch den Anwender am Modem mittels DIL-Schalter bzw. Hayes-Befehl eingestellt wird.

5. Verfahren nach Anspruch 1 dadurch gekennzeichnet, daß für den Fall, daß das Auslösen der bestehenden Wahlverbindung und das anschließende Wiederbelegen der Leitung keine Wahlbereitschaft der Leitung herbeiführt, weitere Unterbrechungen und Neubelegungen erfolgen, bis die gewünschte Betriebsbereitschaft/Wahlbereitschaft/Wählton hergestellt ist.

6. Verfahren nach Anspruch 1 und 5 dadurch gekennzeichnet, daß die Schleifenunterbrechungszeit mit Zunahme der Anzahl der Fehlversuche verlängert wird.

7. Verfahren nach Anspruch 1 dadurch gekennzeichnet, daß weitere Trenn- und Neubelegungszyklen erfolgen, wenn nach einer Amtszugangsziffer bzw. einem Amtszugangsschaltkennzeichen keine Wahlbereitschaft/Wählton hergestellt wurde.

8. Verfahren nach Anspruch 1, 5, 6 und 7 dadurch gekennzeichnet, daß bei nicht herzustellender Wahlbereitschaft ein Alarm ausgelöst wird bzw. eine Signalisierung erfolgt.

9. Verfahren nach Anspruch 1 dadurch gekennzeichnet, daß die Merkmale der Wahlbereitschaftszeichen/Wähltöne durch den Benutzer eingestellt werden.

10. Verfahren nach Anspruch 1 dadurch gekennzeichnet, daß der Modem in Richtung der abgeschalteten Endgeräte/Telefone Besetzttöne/Besetztzeichen abgibt.

11. Anordnung zur schnellen Weiterleitung einer Alarm- bzw. einer Notrufmeldung über einen Modem, **dadurch gekennzeichnet,** daß im Belegungsstromkreis des Modem ein Trennschaltmittel angeordnet ist, und daß das Trennschaltmittel mit dem Steuerrechner verbunden ist.

12. Anordnung nach Anspruch 11 dadurch gekennzeichnet, daß der im Belegungsstromkreis bereits angeordnete Impulskontakt (i) als Trennschaltmittel geschaltet ist.

13. Anordnung nach Anspruch 11, dadurch gekennzeichnet, daß im Belegungsstromkreis eines Modems ohne Impulskontakt (i) ein Trennkontakt (tr 1) angeordnet ist, welcher vom Steuerrechner angesteuert wird.

14. Anordnung nach Anspruch 11 dadurch gekennzeichnet, daß ein Signalgenerator zur Erzeugung von Belegtsignalen angeordnet ist, daß der Signalgenerator über Schaltmittel bzw. Schaltkontakte (s1;s2) mit den weiterführenden Adern (6/a2 und 5/b2) verbunden ist und daß der Signalgenerator mit dem Steuerrechner verbunden ist.

15. Anordnung nach Anspruch 11 dadurch gekennzeichnet, daß im Modem eine Anpassungseinrichtung für die in der Alarm- und Notruftechnik üblichen Schnittstellen angeordnet ist.

16. Anordnung nach Anspruch 11 dadurch gekennzeichnet, daß zusätzlich Speicher für abzusendende Nachrichten mit dem Modemeingang und mit den Alarm- und Notrufschnittstellen verbunden sind.

EP 0 788 270 A2

Verbindungsstecker Telefonnetz (ST)

| 6/a2 |
| 1/La |
| 5/b2 |
| 2/Lb |

u1

u2

s1  s2

Signalgenerat.
Belegtsign.

Schleifenstr.
erkenn.

Rufstrom
Ausw.

Standart-
Modem-
Schaltung

Ü

tr 1

i
(Wahlimpulse)

Wähltonauswert.

TR

Steuerrechner

(Mikrocontr.)

Fig. 1

TAE 6/N

TAE 6/F

La

zum
Telefonnetz

Lb

1 6

2 5

1

2

erfindungsgemäßer
Modem

Telefon

Fig. 2

EP 0 788 270 A2

übliche Schnittstellen der
Alarm und Notruftechnik

Serielle
Schnittstelle

Telefonnetz | Erfindungsgemäßer
Modem

Endeinrichtung
zur Aufn. und
Verarbeit. von
A und N Sign.
(NDEE)

Telefonnetz | Kombinationsgerät aus dem erfindungsgem.
Modem und einer Alarm und Notrufdatenendeinrichtung (NDEE)

Fig. 3

EP 0 788 270 A2